# EUROPÄISCHE PATENTSCHRIFT

(11) **EP 2 419 991 B1**
(45) Veröffentlichungstag und Bekanntmachung des Hinweises auf die Patenterteilung: **27.03.2013**
(21) Anmeldenummer: 09753125.5
(22) Anmeldetag: 19.11.2009
(51) Int. Cl.: H02K 1/20, H02K 7/18, F03D 11/00

(54) **GENERATORKÜHLANORDNUNG EINER WINDENERGIEANLAGE**
GENERATOR COOLING ARRANGEMENT OF A WIND TURBINE
SYSTÈME DE REFROIDISSEMENT DE GÉNÉRATEUR POUR UNE ÉOLIENNE

(30) Priorität: 16.04.2009 DE 102009017325
(43) Veröffentlichungstag der Anmeldung: 22.02.2012
(73) Patentinhaber: Avantis Ltd., Hong Kong (CN)
(72) Erfinder: BODENSTEIN, Klaus, Hong Kong (CN); LANGE, Detlef, 46147 Oberhausen (DE); RUPPRICH, Dieter, 48465 Ohne (DE)
(74) Vertreter: Viering, Jentschura & Partner
(86) Internationale Anmeldenummer: PCT/EP2009/065462
(87) Internationale Veröffentlichungsnummer: WO 2010/118792

(56) Entgegenhaltungen:
- EP-A1- 1 257 037
- WO-A1-01/21956
- DE-A1- 4 229 395
- DE-A1- 19 624 519

## Beschreibung

Die Erfindung richtet sich auf einen Stator für einen Generator einer Windkraftanlage oder Windenergieanlage mit einer den Bereich des Statorblechpakets erfassenden Flüssigkeitskühlung, wobei der Stator längs seines von dem Statorblechpaket begrenzten oder gebildeten Umfangs mehrere sich innerhalb und/oder außerhalb des Statorblechpaketes über dessen Axiallängserstreckung erstreckende, von einem flüssigen Kühlmedium durchfließbare Axialrohre und/oder Axialbohrungen aufweist, die Bestandteil einer den zu kühlenden Bereich mäanderartig durchziehenden Kühlfluidleitung eines, insbesondere geschlossenen, Kühlkreislaufes sind..

Windenergieanlagen oder Windkraftanlagen, deren Generator eine möglichst hohe Leistung erbringen und eine möglichst hohe Leistungsdichte aufweisen soll, benötigen eine entsprechende Kühlung des Generators. Üblich sind hier, wie beispielsweise aus der EP 1 200 733 B1 bekannt, Luftkühlungen, bei welchen Außenluft angesaugt wird, welche den Generator um- und durchströmt und die dabei aufgenommene Wärme nach außen vom jeweiligen Windrotor oder der jeweiligen Windenergie- oder Windkraftanlage fort abführt. Damit es hierbei aufgrund der Feuchtigkeit und des Salzgehaltes der Außenluft nicht zu verstärkter Korrosion und damit einer Beeinträchtigung der Lebensdauer des gekühlten Generators kommt, ist beispielsweise in der DE 10 2004 018 758 A1 auch schon vorgeschlagen worden, einen geschlossenen, ausschließlich innerhalb des Turmkopfes einer Windenergieanlage oder Windkraftanlage angeordneten Kühlmittelkreislauf vorzusehen, welcher ebenfalls Luft als Kühlmedium aufweist.

Ein gattungsgemäßer Stator mit einer Kühlung, die auch Axialrohre und/oder Axialbohrungen umfasst, die durch das Statorblechpaket geführt sind und von einem Kühlmedium durchflossen werden, ist aus der DE 102 53 699 A1 bekannt. Bei dieser bekannten Kühlung strömt das Kühlmedium axial von beiden Seiten völlig frei auf den Stator und den Läufer zu, tritt in Axialbohrungen sowohl des Läufers als auch des Stators ein und wird dann über Radialbohrungen oder Radialschlitze nach außen aus dem Motorgehäuse abgeführt. Als Kühlmedium wird hier bereits eine wässrige Lösung verwendet. Eine gezielte Führung des Fluids oder Kühlmediums im Bereich der Axialbohrungen findet nicht statt.

Aus der Praxis ist auch die Wasserkühlung von Generatoren von Windkraftanlagen oder Windenergieanlagen bekannt. So ist ein gattungsgemäßer Stator aus der WO 01/21956 A1 bekannt.

Ein grundsätzliches Problem bei der Verwendung von Wasser als Kühlmedium besteht darin, dass es aufgrund der gewünscht hohen Wärmeaufnahmekapazität des Wassers entlang des Kühlweges zu einer stetig ansteigenden Temperatur des Wassers kommt, die eine ungleichmäßige Kühlung des Generators oder Stators längs seines Umfangs und damit Temperaturunterschiede innerhalb des Statorblechpakets oder der Wicklungen bewirkt. Aufgrund der Temperaturunterschiede innerhalb der Materialien kommt es zu unterschiedlichen Wärmeausdehnungen des Materials und damit zu thermisch bedingten Unwuchten im Generator.

Der Erfindung liegt die Aufgabe zugrunde, eine Lösung zu schaffen, die eine verbesserte Kühlung des Blechpakets eines Stators einer Windkraft- oder Windenergieanlage ermöglicht.

Bei einem Stator der eingangs bezeichneten Art wird diese Aufgabe erfindungsgemäß dadurch gelöst, dass der Stator zumindest abschnittsweise längs seines von dem Statorblechpaket begrenzten oder gebildeten Umfangs mehrere, jeweils mehrere innerhalb oder außerhalb des Statorblechpakets angeordnete Axialrohre und/oder Axialbohrungen aufweisende und den mäanderartig verlaufenden Bereich der Kühlfluidleitung des Kühlkreislaufes ausbildende und miteinander leitungsmäßig verbundene Kühlsegmente aufweist, die jeweils ein benachbartes Kühlsegment überschlagend miteinander verbunden sind.

Durch die Erfindung wird eine Kühlung oder ein Kühlsystem oder eine Kühlanordnung eines Generators einer Windkraftanlage oder Windenergieanlage bereitgestellt, bei welcher/welchem mittels indirekter Kühlung durch durch die Axialrohre oder Axialbohrungen geführtem Wassers als Kühlmedium beim Betrieb des Generators auftretende Wärme, insbesondere in Form von Verlustwärme, abgeführt werden kann. Aufgrund der mäanderartigen Führung der die Axialrohre und/oder Axialbohrungen umfassenden Kühlfluidleitung lässt sich das Wasser gezielt unterhalb oder innerhalb des Statorblechpaketes, insbesondere auf der dem zugeordneten Läufer abgewandten Seite der Wicklungen, durch den zu kühlenden Bereich führen. Bei einem geschlossenen Kühlkreislauf entfallen darüberhinaus aufwändige Wasseraufbereitungsmaßnahmen, da das Wasser permanent im Kreislauf geführt wird.

Zur Ausbildung des zu kühlenden Bereiches des Stators ist es weiterhin von Vorteil, wenn die mäanderartig geführte oder verlaufende Kühlfluidleitung so verschaltet ist, dass jeweils benachbarte Axialrohre und/oder Axialbohrungen nicht nur jeweils in entgegengesetzter Richtung von dem Kühlmedium Wasser durchflossen werden, sondern auch derart verschaltet sind, dass damit eine Vergleichmäßigung der Kühlung und damit eine Verminderung der Temperaturunterschiede über den Umfang des Statorblechpaketes erreicht wird. Um dies zu erreichen, ist die Fluidleitung in mehrere Kühlsegmente aufgeteilt. Ein Kühlsegment umfasst dabei mehrere in axialer Richtung des Statorblechpakets von der einen Seite zur anderen Seite verlaufende Axialrohre oder Axialbohrungen. Im Ausführungsbeispiel umfasst ein Kühlsegment jeweils sieben Axialrohre und Axialbohrungen. Diese Kühlsegmente sind jeweils benachbart aneinandergrenzend längs des gesamten Umfangs des Statorblechpakets ausgebildet und angeordnet. Diese sind aber so verschaltet, dass unter Überschlagung des jeweils benachbarten Kühlsegmentes ein Kühlsegment jeweils mit dem übernächsten Kühlsegment leitungsmäßig verbunden ist. Lediglich zwei benachbarte Kühlsegmente sind zur Ausbildung eines Rücklaufes unmittelbar miteinander verbunden, wobei sich diese Verbindungsstelle vorzugsweise in der Mitte oder der Hälfte des mäanderartig verlaufenden Bereiches der Kühlfluidleitung befindet. Am dieser Verbindungsstelle entgegengesetzten Ende des mäanderartig verlaufenden Bereiches der Kühlfluidleitung bilden zwei benachbarte, aber voneinander getrennte Kühlsegmente ein Auslaufkühlsegment und ein Einlaufkühlsegment aus, die aber ebenfalls strömungstechnisch und leitungsmäßig miteinander verbunden sind. Auf diese Weise wird eine Kühlfluidleitung geschaffen, bei der dadurch, dass im Einlaufbereich das Wasser mit seiner kältesten Temperatur benachbart zum Auslaufbereich des Wassers mit seiner höchsten Temperatur angeordnet ist und sich durch die Verschaltung fortsetzend immer Bereiche mit der nächst höheren und der nächst niedrigeren Temperatur aneinandergrenzen, sich eine Temperaturvergleichmäßigung und Temperaturmittlung über den Bereich des mäanderartigen Verlaufes der Kühlfluidleitung einstellt. Durch diese Vergleichmäßigung der Temperatur, treten keine signifikant unterschiedlichen Bereiche unterschiedlicher Wärmeausdehnung des Stators oder Läufers auf, die zu einer wärmebedingten, thermischen Unwucht führen können.

Hierbei ist es für die Ausbildung eines geschlossenen Kreislaufs weiterhin von Vorteil, wenn an einem End- oder Übergangsbereich der Kühlfluidleitung ein Einlaufkühlsegment und ein Auslaufkühlsegment einerseits sowie vorzugsweise in der Mitte oder Hälfte des mäanderartig ausgebildeten Bereiches der Kühlfluidleitung zwei Kühlsegmente andererseits jeweils benachbart zueinander angeordnet und zur Ausbildung einer Rücklaufverbindung miteinander verbunden sind.

Hierbei kann es in Ausgestaltung der Erfindung vorgesehen sein, dass eine solche Kühlfluidleitung sich über den gesamten im Statorblechpaket begrenzten oder gebildeten Umfang des Stators erstreckt. Es kann aber auch vorgesehen sein, dass sich eine solche Kühlfluidleitung lediglich über einen bestimmten Abschnitt des vom Statorblechpaket begrenzten oder gebildeten Umfangs erstreckt und somit gewünschtenfalls mehrere derartige Kühlfluidleitungen um den gesamten Umfang verteilt angeordnet und ausgebildet sind.

Die Erfindung zeichnet sich daher zum einen weiterhin dadurch aus, dass sich eine mäanderartig verlaufende Kühlleitung längs des gesamten von dem Statorblechpaket begrenzten oder gebildeten Umfangs erstreckt sowie alternativ dadurch aus, dass sich mehrere mäanderartig verlaufende Kühlleitungen längs des gesamten von dem Statorblechpaket begrenzten oder gebildeten Umfangs erstrecken.

Um eine gleichmäßige Kühlung des Stators im Bereich des Statorblechs zu erzielen, sieht die Erfindung weiterhin vor, dass längs des gesamten von dem Statorblechpaket begrenzten oder gebildeten Umfangs von 360° Kühlsegmente angeordnet sind.

Um auf beiden Seiten des Stators jeweils entsprechende Umlenkkanäle oder Umlenkleitungen zur Ausbildung der mäanderartigen Struktur der Kühlfluidleitung ausbilden zu können, sieht die Erfindung die Möglichkeit vor, dass die Kühlsegmente in axialer Richtung beidseits des Statorblechpakets und/oder des Stators angeordnete, insbesondere kammerartig und/oder deckelförmig ausgebildete Strömungsumlenkelemente aufweisen.

Derartige Strömungsumlenkelemente können Kanäle aufweisen, mit denen jeweils übernächste Kühlsegmente in flüssigkeitsleitende Verbindung miteinander gebracht werden können. Im Ausführungsbeispiel sind Strömungsumlenkelemente ausgebildet, die jeweils vier Kühlsegmente überdecken und zwei Leitungsverbindungen beinhalten, mit denen jeweils zwei übernächste Kühlsegmente der vier Kühlsegmente miteinander verbunden werden. Für die Ausbildung eines getriebelos angetriebenen Generators einer Windkraftanlage oder einer Windenergieanlage ist es von Vorteil, wenn der Generator einen Außenläufer und einen Stator aufweist, die auf einer gemeinsamen, so genannten "King Tube" angeordnet sind. In einem solchen Fall ist es gemäß Weiterbildung der Erfindung zweckmäßig, wenn die Kühlsegmente und/oder die Axialrohre und/oder die Axialbohrungen im Rücken des Statorblechpakets angeordnet sind, was die Erfindung ebenfalls vorsieht.

Dabei ist es darüber hinaus weiterhin von Vorteil, wenn der Kühlkreislauf die gesamte radiale Umgangsfläche außerhalb, insbesondere unterhalb, der Wicklungen des Statorblechpakets bestreicht und/oder erfasst. Dadurch lässt sich die bei einem Generatorbetrieb einer Windkraftanlage auftretende Wärme besonders gut abführen.

In diesem Fall ist es dann weiterhin zweckmäßig, wenn die Axialrohre und/oder Axialbohrungen auf der dem Läufer abgewandten Seite der Wicklungen innerhalb oder außerhalb des Statorblechpakets angeordnet sind, wobei es insbesondere von Vorteil ist, wenn die Axialrohre und/oder Axialbohrungen unterhalb der Wicklungen innerhalb oder außerhalb des Statorblechpakets angeordnet sind, was die Erfindung ebenfalls vorsieht.

Von besonderem Vorteil ist es weiterhin, wenn die Axialrohre und/oder Axialbohrungen außerhalb des durch die Wicklungen induzierbaren oder induzierten Magnetfeldes angeordnet sind, da dadurch eine größere Freiheit hinsichtlich des zur Ausbildung von Axialrohren verwendbaren Materials besteht und insbesondere in die Axialrohre kein Magnetfeld induziert wird.

In besonders vorteilhafterweise lässt sich mit der erfindungsgemäßen Art und Anordnung der Kühlung und dem erfindungsgemäßen Kühlungssystem eine Kühlung insbesondere dann bewirken, wenn der Stator von einem, insbesondere mit Permanentmagneten bestückten, Außenläufer umgeben ist.

Um eine gute Wärmeleitfähigkeitsmöglichkeit innerhalb des Statorblechpaketes bereitzustellen und eine gute Wärmeübertragung auf die Axialrohre sicherzustellen, sieht die Erfindung in Weiterbildung vor, dass die Axialrohre jeweils in eine Axialbohrung, insbesondere durch Aufweitung, eingepresste und/oder eingerollte Kupferrohre sind. Kupferrohre weisen eine gute Wärmeleitfähigkeit auf und können die von dem Statorblechpaket aufgenommene Wärme gut an das innerhalb der Kupferrohre fließende Wasser abgeben. Zur Montage und um eine besonders gute Anlage der Kupferrohre an die Innenumfangsfläche von in das Statorblechpaket eingebrachte Axialbohrungen zu ermöglichen, werden die Kupferrohre in die Bohrungen des Statorblechpaketes vorzugsweise eingerollt oder aber auch unter Durchmesseraufweitung eingepresst. Hierdurch sind die die Axialrohre ausbildenden Kupferrohre fest in den Axialbohrungen fixiert.

Um einen guten Wärmeübergang von dem Material des Statorblechpakets auf die Kupferrohre zu gewährleisten und den Wärmeübergangswiderstand zu reduzieren, sieht die Erfindung in weiterer Ausgestaltung vor, dass die an der Innenseite jeweils einer Axialbohrung anliegende Außenseite der Kupferrohre mit einer Wärmeleitpaste bestrichen oder versehen ist.

Um zu verhindern, dass in den Zwischenraum zwischen der Außenseite des jeweiligen Kupferrohres und der Innenumfangsfläche der jeweiligen Axialbohrung Kühlflüssigkeit eintritt und hier beispielsweise eine korrodierende Wirkung auf das Eisenmaterial des Statorblechpakets ausübt, sieht die Erfindung weiterhin vor, dass die stirnseitigen Öffnungsquerschnitte der Axialbohrungen jeweils mittels eines einen Silikonkern und eine Teflonhülle aufweisenden O-Rings gegen das jeweils anliegende Kupferrohr abgedichtet sind. Hierdurch wird das Eindringen des jeweiligen Kühlfluids, insbesondere Wasser, in den Zwischenraum verhindert. Andererseits ist durch die spezielle Materialauswahl der O-Ringe, die aus einem Silikonkern und einer Teflonhülle bestehen, sichergestellt, dass diese alterungsbeständig sind und zudem den beim Betrieb des Generators auftretenden relativ hohen Temperaturen standhalten.

Das besonders bevorzugte und aufgrund seiner hervorragenden Kühlwirkung besonders zweckmäßige Kühlmedium ist Wasser, weshalb sich die Erfindung weiterhin dadurch auszeichnet, dass im Kühlkreislauf Wasser als Kühlfluid strömt, insbesondere umgewälzt oder umgepumpt wird.

Um das umlaufende Kühlwasser oder Kühlfluid nach Durchlaufen des mäanderartigen Bereichs der Kühlfluidleitung wieder abzukühlen, ist es zweckmäßig, einen insbesondere luftgekühlten Wärmetauscher oder einen Luftkühler vorzusehen, durch welchen hindurch das Wasser oder die Kühlflüssigkeit im Wege einer das Auslaufkühlsegment mit dem Einlaufkühlsegment der Kühlfluidleitung verbindenden Fluidleitung geführt ist. Dieser Wärmetauscher oder Kühler kann beispielsweise derart am Turm einer Windenergieanlage oder einer Windkraftanlage angeordnet sein, dass daran außenseitig die Außenluft zur Kühlung des Kühlkreislaufes vorbeigeführt werden kann.

Schließlich zeichnet sich die Erfindung auch noch dadurch aus, dass der Stator Bestandteil eines vielpoligen Synchrongenerators oder Asynchrongenerators ist, dessen Läufer, insbesondere Außenläufer, ohne Zwischenschaltung eines Getriebes mit dem Windrotor der Windkraftanlage oder Windenergieanlage verbunden ist. Insbesondere bei einer solchen Anlage ist die Erfindung in vorteilhafterweise verwendbar.

Die Erfindung ist nachstehend anhand einer Zeichnung beispielhaft näher erläutert. Diese zeigt in
- Fig. 1a: in perspektivischer Darstellung eine Außenansicht eines Stators und eines Außenläufers eines Generators einer Windenergieanlage,
- Fig. 1b: den Stator und den Außenläufer in perspektivischer Darstellung in zur Fig. 1a entgegengesetzten Ansicht,
- Fig. 2: in perspektivischer Darstellung einen Ausschnitt einer Seite des Stators mit aus dem Statorblechpaket austretenden Axialrohren einer Flüssigkeitskühlung,
- Fig. 3: in Ausschnittsdarstellung den Bereich der Axialrohre der Flüssigkeitskühlung mit aufgesetzter Schale eines Strömungsumlenkelementes,
- Fig. 4: in perspektivischer Darstellung die Innenansicht eines Deckels der Schale des in Figur 3 offen dargestellten Strömungsumlenkelementes,
- Fig. 5: eine Ansicht der Innenseite einer Schale eines ein Einlaufkühlsegment, ein Auslaufkühlsegment und zwei strömungsmäßig miteinander verbundene Kühlsegmente aufweisenden Strömungsumlenkelementes,
- Fig. 6: einen Blick auf die Innenseite eines die Schale des Strömungsumlenkelementes nach

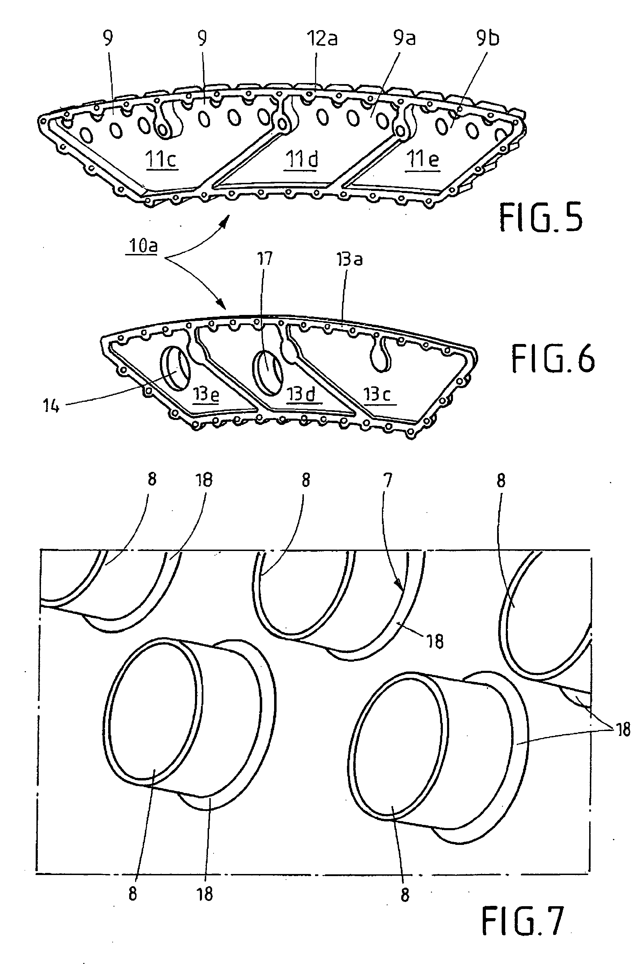

- Fig. 5: verschließenden Deckels,
- Fig. 7: in vergrößerter perspektivischer Darstellung den Austrittsbereich von Axialrohren aus Axialbohrungen der Kühlfluidleitung und in

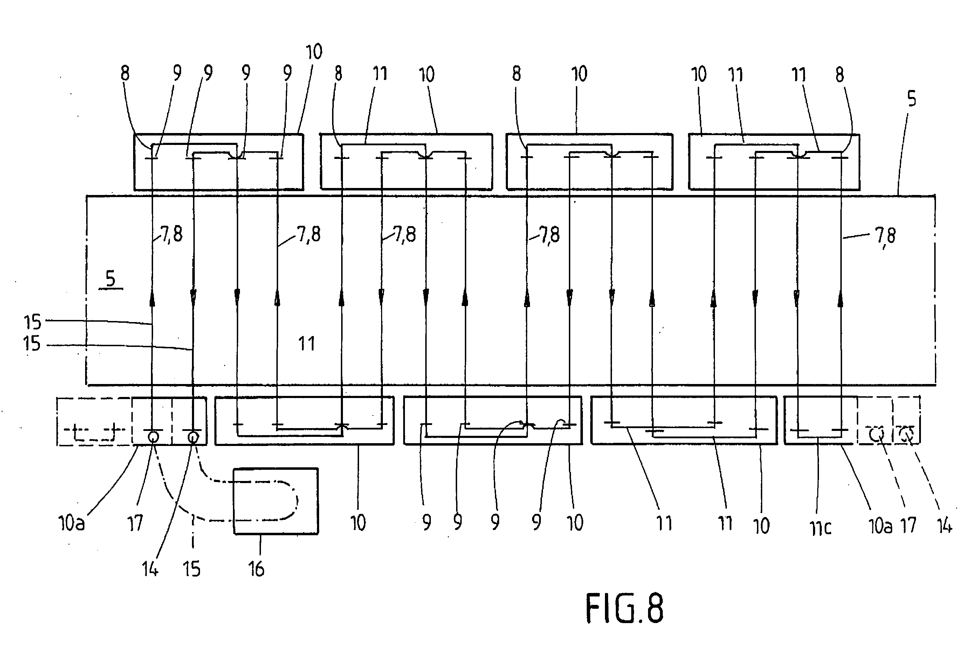

- Fig. 8: in schematischer Darstellung eine abgerollte Aufsicht auf eine mäanderartig ausgebildete Kühlfluidleitung eines erfindungsgemäßen Stators.

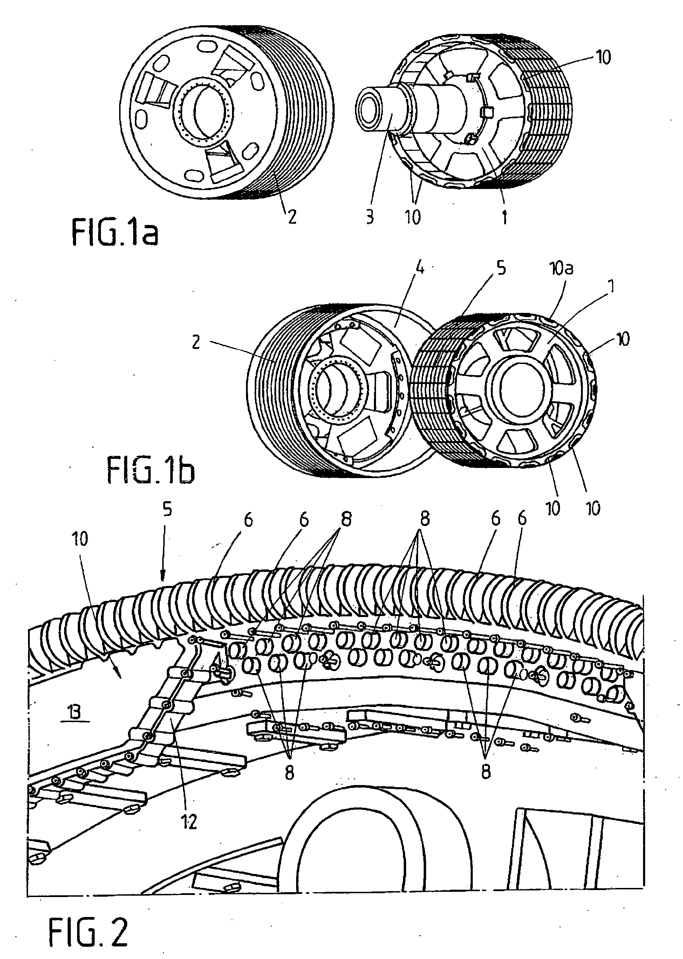

Die Figuren 1a und 1b zeigen einen Stator 1, der zusammen mit einem Außenläufer 2 auf einer gemeinsamen Königswelle oder "King Tube" 3 montiert den Generator einer Windenergie- oder Windkraftanlage ausbildet. Der Außenläufer 2 weist innenseitig einen aus Permanentmagneten aufgebauten Innenring 4 auf, zu dem die mit Wicklungen versehenen, ein Statorblechpaket 5 ausbildenden Blechsegmente mit angesetzten Wickelköpfen 6 gegenüberliegend angeordnet sind. Der Generator bildet einen vielpoligen Asynchrongenerator oder Synchrongenerator aus, der ohne Zwischenschaltung eines Getriebes vom Windrotor im Turm einer Windkraftanlage oder einer Windenergieanlage angetrieben wird.

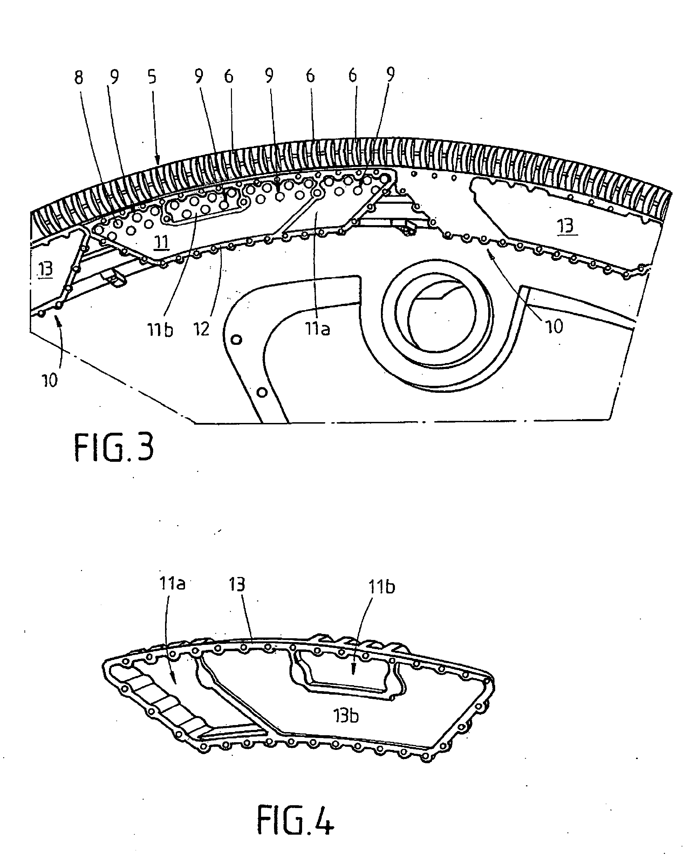

Unterhalb der Wickelköpfe 6 und damit unterhalb der nicht näher dargestellten Wicklung des Stators 1 sind in dem Statorblechpaket gleichmäßig über den Umfang des Stators 1 verteilt zwei Reihen radial beabstandeter und umfangsmäßig gegeneinander versetzter Axialbohrungen 7 vorgesehen. In den Axialbohrungen 7 sind in Form von Axialrohren 8 Kupferrohre eingelassen, die auf beiden Seiten geringfügig aus dem Statorblechpaket 5 hervorstehen, wie dies für einen Umfangsabschnitt aus der Figur 2 ersichtlich ist. Jeweils sieben Rohre, drei der radialinneren und vier der radialäußeren Reihe an Axialrohren 8, bilden ein Kühlsegment 9 aus. Ein Kühlsegment 9 zeichnet sich dadurch aus, dass die darin zusammengefassten Axialrohre 8 jeweils gemeinsam von der Kühlflüssigkeit von einer Seite des Stators 1 zur anderen Seite des Stators 1 durchflossen werden, wie dies schematisch auch aus der Figur 8 ersichtlich ist, in welcher ein jeweiliges Kühlsegment 9 schematisch als waagerechte Linie dargestellt ist. Jeweils vier Kühlsegmente 9 sind in einem Strömungsumlenkelement 10 oder 10a zusammengefasst. Wie andeutungsweise aus der Figur 3 ersichtlich ist, grenzen die einzelnen Strömungsumlenkelemente 10 jeweils aneinander und bilden, wie dies aus den Figuren 1a und 1b ersichtlich ist, jeweils auf beiden Seiten des Stators 1 aneinandergereiht einen geschlossenen Kreis längs des außenseitigen Umfangs des Statorblechpaketes 5 des Stators 1. Eines der Strömungsumlenkelemente bildet dabei ein Anschluss- und Rücklauf-Strömungsumlenkelement 10a aus, welches in den Figuren 5 und 6 dargestellt ist.

Die Strömungsumlenkelemente 10 erfassen jeweils vier Kühlsegmente 9 und weisen innere Verbindungskanäle 11 auf, die zwei jeweils übernächst zueinander gelegene Kühlsegmente 9 in jeweils ein benachbartes Kühlsegment 9 überspringender und in einer von dem Kühlmedium durchströmbaren Art und Weise verbinden. Hierbei besteht jedes Strömungsumlenkelement 10, 10a aus einer Schale 12, 12a und einem zugeordneten Deckel 13, 13a. Wie aus der Fig. 3 ersichtlich ist, grenzt eine Schale 12 eines Strömungsumlenkelementes 10 jeweils vier benachbarte, aus jeweils sieben Axialrohren 8 bestehende Kühlsegmente 9 gegeneinander ab. Dabei ist innerhalb der Schale 12 ein zwei Kühlsegmente 9 verbindender innerer Verbindungskanal 11 ausgebildet, während die Verbindung der beiden verbleibenden übernächst zueinander gelegenen Kühlsegmenten 9 mit Hilfe eines im Deckel 13 ausgebildeten inneren Verbindungskanals 11 hergestellt wird, von welchem in der Innenansicht des Deckels 13 nach der Fig. 4 die Ein- und Austrittsbereiche 11a, 11b ersichtlich sind, die dem entsprechend abgegrenzten Bereichen 11a und 11b in der Fig. 3 entsprechen. Der Deckel 13 ist kongruent zur Fläche der Schale 12 ausgebildet und weist einen, den inneren Kanal 11 verschließenden flachen Bereich 13b und den die Bereiche 11a und 11b umfassenden inneren Verbindungskanal 11 auf.

Auf diese Weise sind auf beiden Seiten des Stators 1 Strömungsumlenkelemente 10 angeordnet, wobei diese allerdings um zwei Kühlsegmente 9 gegeneinander versetzt angeordnet
sind, wie dies aus der Fig. 8 ersichtlich ist. Auf einer Seite des Stators 1 ist dann ein Strömungsumlenkelement 10a angeordnet, das aus einer Schale 12a, deren Innenansicht aus Fig. 5 ersichtlich ist, und einem Deckel 13a, dessen Innenansicht aus Fig. 6 ersichtlich ist, gebildet ist. Bei dem Strömungsumlenkelement 10a bildet die Schale 12a einen inneren Rücklaufkanal 11c aus, der zwei benachbart zueinander angeordnete Kühlsegmente 9 miteinander verbindet. Darüber hinaus enden die beiden weiteren Kühlsegmente 9 des Strömungsumlenkelementes 10a in einem Einlaufabschnitt 11d und einem Auslaufabschnitt 11e, so dass diese Kühlsegmente 9 des Strömungsumlenkelementes 10a ein Einlaufkühlsegment 9a und ein Auslaufkühlsegment 9b ausbilden. Kongruent dazu ist der Deckel 13a derart ausgebildet, dass sein Abschnitt 13c den inneren Rücklaufkanal 11c abdeckt, der Deckelabschnitt 13d den Einlaufabschnitt 11d und der Deckelabschnitt 13e den Auslaufabschnitt 11e abdeckt. Über die Auslauföffnung 14 ist die, wie aus Fig. 8 ersichtlich, mit Hilfe der Strömungsumlenkelemente 10, 10a mäanderförmig durch das Statorblechpaket 5 geführte und insgesamt mit 15 bezeichnete Kühlfluidleitung mit einem Wärmetauscher 16 leitungsmäßig verbunden, wobei dieser Bereich der Leitung nach Durchführung durch den Wärmetauscher 16 zur Einlauföffnung 17 im Deckelabschnitt 13d des Deckels 13a rückgeführt ist. Hierdurch entsteht ein geschlossener Wasserkreislauf, der die mäanderartig geführte Kühlfluidleitung 15 mit Zu- und Ableitung zum und vom luftgekühlten Wärmetauscher 16 umfasst. Im Wärmetauscher 16 gekühlt, gelangt das als Kühlfluid verwendete flüssige Wasser durch die Einlauföffnung 17 in den mäanderartig geführten Bereich der Kühlfluidleitung 15 und durchströmt diese in Richtung der dargestellten Pfeile, wird am Strömungsumlenkelement 10a zurückgeführt und tritt an der Auslauföffnung 14 aus dem mäanderartig ausgeformten Bereich der Kühlfluidleitung 15 aus und wird in Fortführung der Kühlfluidleitung 15 durch den Wärmetauscher 16 geführt, wo das Kühlmedium Wasser dann die aufgenommene Wärme an die Umgebungsluft mittels des Wärmetauschers 16 abgibt und dann gekühlt wieder dem mäanderartig geführten Bereich der Kühlfluidleitung 15 zugeführt wird. Die Umwälzung im Kreislauf erfolgt mit Hilfe einer nicht dargestellten Pumpe.

Die Kühlsegmente 9, 9a, 9b und die Axialrohre 8 sowie die Axialbohrungen 7 sind im Rücken des Statorblechpaketes 5 angeordnet, so dass der mittels der Kühlfluidleitung 15 insgesamt ausgebildete Kühlkreislauf die gesamte radiale Umfangsfläche außerhalb, im vorliegenden Ausführungsbeispiel auch unterhalb, der Wicklungen des Statorblechpaketes 5 bestreicht und erfasst. Hierbei sind die Axialrohre 8 und die Axialbohrungen 7 auf der dem Außenläufer 2 abgewandten Seite der Wicklungen innerhalb des Statorblechpaketes 5 angeordnet. Dabei sind die Axialrohre 8 und die Axialbohrungen 7 soweit zu der Wicklung beabstandet, dass die Axialrohre 8 und die Axialbohrungen 7 außerhalb des durch die Wicklungen induzierbaren oder induzierten Magnetfeldes angeordnet sind.

Auch wenn im vorliegenden Beispiel die Axialrohre 8 und die Axialbohrungen 7 im Statorblechpaket 5 ausgebildet sind, so ist es auch möglich, diese in einem unterhalb des eigentlichen Statorblechpakets kreisringförmig angeordneten Materialring aus Metall anzuordnen und auszubilden.

Um von dem eisenhaltigen Statorblechpaket 5 oder dem ringförmigen Metallmaterial eine gute Wärmeleitung und gute Wärmeübertragung auf das in den Axialrohren 8 fließende Kühlmedium Wasser zu erreichen, bestehen die Axialrohre 8 aus Kupferrohren, die durch Einrollen oder Einpressen und/oder Aufweiten fest an die Innenumfangsfläche der Axialbohrungen 7 angelegt und somit in den Axialbohrungen 7 fixiert sind. Um den Wärmeübergang weiter zu verbessern und den Wärmeübergangswiderstand zu reduzieren, wird die Außenumfangsfläche der Kupferrohre vor der Aufweitung oder dem Einrollen der Kupferrohre mit einer Wärmeleitpaste bestrichen und versehen, so dass eine besonders intensive Wärmeleitung von dem das Kupferrohr umgebenden Eisenmaterial in das Kupferrohr und von diesem in das darin fließende Flüssigkeits- und Kühlmedium Wasser bewirkt wird. Der stirnseitige Öffnungsquerschnitt einer jeden Axialbohrung 7 ist dabei mittels eines einen Silikonkern und eine Teflonhülle aufweisenden O-Rings 18 gegen das jeweils anliegende, als Kupferrohr ausgebildete Axialrohr 8 abgedichtet.

Durch die in Fig. 8 dargestellte mäanderartig verlaufende Führung der Kühlfluidleitung 15 wird erreicht, dass die jeweils im Bereich des Statorblechpakets 5 liegenden Axialrohre 7 benachbarter Kühlsegmenten 9 jeweils in gegenläufiger Richtung von dem Kühlfluid Wasser durchströmt werden, wobei aufgrund des Überspringens des jeweils nächstgelegenen Kühlsegmentes und der Ausbildung des den inneren Rücklaufkanal 11c aufweisenden Strömungsumlenkelementes 10a es so ist, dass von der Auslauföffnung 14 und der Einlauföffnung 17 ausgehend jeweils Kühlsegmente 9 nebeneinander angeordnet sind, in denen das Kühlmedium mit seiner höchsten und seiner niedrigsten Temperatur, gefolgt von nebeneinander liegenden Kühlsegmenten, die von dem Kühlmedium mit seiner nächst niedrigeren und nächst höheren Temperatur, und so weiter fort, durchströmt werden, so dass sich insgesamt über die Länge des mäanderartig geführten Bereichs der Kühlfluidleitung 15 eine vergleichmäßigte Temperatur innerhalb des Statorblechpaketes 5 einstellt und hierdurch die Ausbildung thermisch bedingter Unwuchten im Stator 1 vermieden, zumindest aber deutlich vermindert ist.

## Patentansprüche

1. Stator (1) für einen Generator einer Windkraftanlage mit einer den Bereich des Statorblechpakets (5) erfassenden Flüssigkeitskühlung, wobei der Stator (1) längs seines von dem Statorblechpaket (5) begrenzten oder gebildeten Umfangs mehrere sich innerhalb und/oder außerhalb des Statorblechpakets (5) über dessen Axiallängserstreckung erstreckende, von einem flüssigen Kühlmedium durchfließbare Axialrohre (8) und/oder Axialbohrungen (7) aufweist, die Bestandteil einer den zu kühlenden Bereich mäanderartig durchziehenden Kühlfluidleitung (15) eines, insbesondere geschlossenen, Kühlkreislaufes sind,
**dadurch gekennzeichnet,**
**dass** der Stator (1) zumindest abschnittsweise längs seines von dem Statorblechpaket (5) begrenzten oder gebildeten Umfangs mehrere, jeweils mehrere innerhalb oder außerhalb des Statorblechpakets (5) angeordnete Axialrohre (8) und/oder Axialbohrungen (7) aufweisende und den mäanderartig verlaufenden Bereich der Kühlfluidleitung (15) des Kühlkreislaufes ausbildende und miteinander leitungsmäßig verbundene Kühlsegmente (9, 9a, 9b) aufweist, die jeweils ein benachbartes Kühlsegment (9) überschlagend miteinander verbunden sind.

2. Stator (1) nach Anspruch 1, **dadurch gekennzeichnet, dass** an einem End- oder Übergangsbereich der Kühlfluidleitung (15) ein Einlaufkühlsegment (9a) und ein Auslaufkühlsegment (9b) einerseits sowie vorzugsweise in der Mitte oder Hälfte des mäanderartig ausgebildeten Bereiches der Kühlfluidleitung (15) zwei Kühlsegmente (9) andererseits jeweils benachbart zueinander angeordnet und zur Ausbildung einer Rücklaufverbindung (11c) miteinander verbunden sind.

3. Stator (1) nach Anspruch 1 oder 2, **dadurch gekennzeichnet, dass** sich eine mäanderartig verlaufende Kühlleitung (15) längs des gesamten von dem Statorblechpaket (5) begrenzten oder gebildeten Umfangs erstreckt.

4. Stator (1) nach Anspruch 1 oder 2, **dadurch gekennzeichnet, dass** sich mehrere mäanderartig verlaufende Kühlleitungen (15) längs des gesamten von dem Statorblechpaket (5) begrenzten oder gebildeten Umfangs erstrecken.

5. Stator (1) nach einem der vorhergehenden Ansprüche, **dadurch gekennzeichnet, dass** beidseits längs des gesamten von dem Statorblechpaket (5) begrenzten oder gebildeten Umfangs von 360° Kühlsegmente (9, 9a, 9b) angeordnet sind.

6. Stator (1) nach einem der vorhergehenden Ansprüche, **dadurch gekennzeichnet, dass** die Kühlsegmente (9, 9a, 9b) in axialer Richtung beidseits des Statorblechpakets (5) und/oder des Stators (1) angeordnete, insbesondere kammerartig und/oder deckelförmig ausgebildete Strömungsumlenkelemente (10, 10a) aufweisen.

7. Stator (1) nach einem der vorhergehenden Ansprüche, **dadurch gekennzeichnet, dass** die Kühlsegmente (9, 9a, 9b) und/oder die Axialrohre (8) und/oder Axialbohrungen (7) im Rücken des Statorblechpakets (5) angeordnet sind.

8. Stator (1) nach einem der vorhergehenden Ansprüche, **dadurch gekennzeichnet, dass** der Kühlkreislauf die gesamte radiale Umfangsfläche außerhalb, insbesondere unterhalb, der Wicklungen des Statorblechpakets (5) bestreicht und/oder erfasst.

9. Stator (1) nach einem der vorhergehenden Ansprüche, **dadurch gekennzeichnet, dass** die Axialrohre (8) und/oder Axialbohrungen (7) auf der dem Läufer (2) abgewandten Seite der Wicklungen innerhalb oder außerhalb des Statorblechpakets (5) angeordnet sind.

10. Stator (1) nach einem der vorhergehenden Ansprüche, **dadurch gekennzeichnet, dass** die Axialrohre (8) und/oder Axialbohrungen (7) unterhalb der Wicklungen innerhalb oder außerhalb des Statorblechpakets (5) angeordnet sind.

11. Stator (1) nach einem der vorhergehenden Ansprüche, **dadurch gekennzeichnet, dass** die Axialrohre (8) und/oder Axialbohrungen (7) außerhalb des durch die Wicklungen induzierbaren oder induzierten Magnetfeldes angeordnet sind.

12. Stator (1) nach einem der vorhergehenden Ansprüche, **dadurch gekennzeichnet, dass** die Axialrohre (8) jeweils in eine Axialbohrung (7), insbesondere durch Aufweitung, eingepresste und/oder eingerollte Kupferrohre sind.

13. Stator (1) nach einem der vorhergehenden Ansprüche, **dadurch gekennzeichnet, dass** die an der Innenseite jeweils einer Axialbohrung (7) anliegende Außenseite der Kupferrohre mit einer Wärmeleitpaste versehen ist und/oder dass die stirnseitigen Öffnungsquerschnitte der Axialbohrungen (7) jeweils mittels eines einen Silikonkern und eine Teflonhülle aufweisenden O-Rings (18) gegen das jeweils anliegende Kupferrohr abgedichtet sind.

14. Stator (1) nach einem der vorhergehenden Ansprüche, **dadurch gekennzeichnet, dass** im Kühlkreislauf Wasser als Kühlfluid strömt, insbesondere umgewälzt oder umgepumpt wird.

15. Stator (1) nach einem der vorhergehenden Ansprüche, **dadurch gekennzeichnet, dass** er Bestandteil eines vielpoligen Synchrongenerators oder Asynchrongenerators ist, dessen Läufer, insbesondere Außenläufer (2), ohne Zwischenschaltung eines Getriebes mit dem Windrotor der Windkraftanlage oder Windenergieanlage verbunden ist.

## Claims

1. Stator (1) for a generator of a wind power installation having liquid cooling covering the region of the stator laminate stack (5), the stator (1) comprising, along the circumference thereof defined or formed by the stator laminate stack (5), a plurality of axial pipes (8) and/or axial bores (7), which extend within and/or outside the stator laminate stack (5) over the axial longitudinal extension thereof and through which a liquid coolant can flow, which axial pipes and/or axial bores are part of a cooling fluid line (15) of a cooling circuit, which is in particular closed, said cooling fluid line passing in a meandering manner through the region to be cooled, **characterised in that** the stator (1) has, at least over a portion along the circumference thereof which is defined or formed by the stator laminate stack (5), a plurality of cooling segments (9, 9a, 9b) which each have a plurality of axial pipes (8) and/or axial bores (7) arranged within or outside the stator laminate stack (5), form the meandering region of the cooling fluid line (15) of the cooling circuit, are connected to one another by means of lines and are each connected to one another in such a way as to bypass an adjacent cooling segment (9).

2. Stator according to claim 1, **characterised in that**, on one hand, an inlet cooling segment (9a) and an outlet cooling segment (9b) at an end or transition region of the cooling fluid line (15) and on the other hand, two cooling segments (9), preferably in the centre or halfway along the meandering region of the cooling fluid line (15), are each arranged adjacent to one another and are connected to one another so as to form a return connection (11c).

3. Stator (1) according to either claim 1 or claim 2, **characterised in that** a meandering cooling line (15) extends along the entire circumference which is defined or formed by the stator laminate stack (5).

4. Stator (1) according to either claim 1 or claim 2, **characterised in that** a plurality of meandering cooling lines (15) extend along the entire circumference which is defined or formed by the stator laminate stack (5).

5. Stator (1) according to any of the preceding claims, **characterised in that** cooling segments (9, 9a, 9b) are arranged on both sides along the entire circumference of 360° which is defined or formed by the stator laminate stack (5).

6. Stator (1) according to any of the preceding claims, **characterised in that** the cooling segments (9, 9a, 9b) have flow deflection elements (10, 10a) which are arranged in the axial direction on both sides of the stator laminate stack (5) and/or of the stator (1), which flow deflection elements are in particular in the form of a chamber and/or cover.

7. Stator (1) according to any of the preceding claims, **characterised in that** the cooling segments (9, 9a, 9b) and/or the axial pipes (8) and/or axial bores (7) are arranged at the back of the stator laminate stack (5).

8. Stator (1) according to any of the preceding claims, **characterised in that** the cooling circuit passes over and/or covers the entire radial circumferential surface outside, in particular beneath, the windings of the stator laminate stack (5).

9. Stator (1) according to any of the preceding claims, **characterised in that** the axial pipes (8) and/or axial bores (7) are arranged within or outside the stator laminate stack (5) on the side of the windings which faces away from the rotor (2).

10. Stator (1) according to any of the preceding claims, **characterised in that** the axial pipes (8) and/or axial bores (7) are arranged within or outside the stator laminate stack (5) beneath the windings.

11. Stator (1) according to any of the preceding claims, **characterised in that** the axial pipes (8) and/or axial bores (7) are arranged outside the magnetic field which can be or is induced by the windings.

12. Stator (1) according to any of the preceding claims, **characterised in that** the axial pipes (8) are copper pipes which are each pressed and/or rolled into an axial bore (7), in particular by means of expansion.

13. Stator (1) according to any of the preceding claims, **characterised in that** the outer side of the copper pipes which bears against the inner side in each case of an axial bore (7) is provided with a thermally conductive paste and/or **in that** the end-face opening cross-sections of the axial bores (7) are each sealed off from the respective bearing copper pipes by means of an O-ring (18) having a silicone core and a Teflon sleeve.

14. Stator (1) according to any of the preceding claims, **characterised in that** water flows, in particular is circulated or is transferred by pumping, in the cooling circuit as cooling fluid.

15. Stator (1) according to any of the preceding claims, **characterised in that** it is part of a multi-pole synchronous generator or asynchronous generator, the rotor, in particular external rotor (2), of which is connected to the wind rotor of the wind power installation or wind turbine, without a transmission being interposed.

## Revendications

1. Stator (1) pour un alternateur d'une éolienne avec un refroidissement par liquide correspondant par sa taille à la zone du paquet de tôles du stator (5), dans lequel le stator (1) présente, le long de sa périphérie délimitée ou formée par le paquet de tôles du stator (5), plusieurs tubes axiaux (8) et/ou alésages axiaux (7) pouvant être traversés par un milieu de refroidissement liquide et s'étendant à l'intérieur et/ou à l'extérieur du paquet de tôles du stator (5) sur son extension longitudinale axiale, lesquels tubes axiaux et/ou alésages axiaux font partie d'une conduite à fluide de refroidissement (15) d'un circuit de refroidissement, en particulier fermé, laquelle conduite à fluide de refroidissement traverse la zone à refroidir en faisant des méandres,
**caractérisé en ce que**
le stator (1) présente, au moins par endroits le long de sa périphérie délimitée ou formée par le paquet de tôles du stator (5), plusieurs segments de refroidissement (9, 9a, 9b) qui présentent respectivement plusieurs tubes axiaux (8) et/ou alésages axiaux (7) agencés à l'intérieur ou à l'extérieur du paquet de tôles du stator (5), et qui forment la zone à méandres de la conduite à fluide de refroidissement (15) du circuit de refroidissement et qui sont reliés entre eux par des conduites, lesquels segments de refroidissement sont reliés entre eux en recouvrant respectivement un segment de refroidissement (9) voisin.

2. Stator (1) selon la revendication 1, **caractérisé en ce que**, au niveau d'une zone d'extrémité ou de transition de la conduite à fluide de refroidissement (15), d'une part un segment de refroidissement d'entrée (9a) et un segment de refroidissement de sortie (9b), et d'autre part, de préférence au milieu ou sur la moitié de la zone formée avec des méandres de la conduite à fluide de refroidissement (15), deux segments de refroidissement (9), sont respectivement agencés voisins l'un à l'autre et reliés entre eux pour former une liaison de retour (11c).

3. Stator (1) selon la revendication 1 ou 2, **caractérisé en ce qu'**une conduite de refroidissement (15) à méandres s'étend le long de l'ensemble de la périphérie délimitée ou formée par le paquet de tôles du stator (5).

4. Stator (1) selon la revendication 1 ou 2, **caractérisé en ce que** plusieurs conduites de refroidissement (15) à méandres s'étendent le long de l'ensemble de la périphérie délimitée ou formée par le paquet de tôles du stator (5).

5. Stator (1) selon l'une des revendications précédentes, **caractérisé en ce que**, de part et d'autre, le long de l'ensemble de la périphérie de 360°, délimitée ou formée par le paquet de tôles du stator (5), sont agencés des segments de refroidissement (9, 9a, 9b).

6. Stator (1) selon l'une des revendications précédentes, **caractérisé en ce que** les segments de refroidissement (9, 9a, 9b) présentent des éléments de déviation d'écoulement (10, 10a) agencés dans la direction axiale de part et d'autre du paquet de tôles du stator (5) et/ou du stator (1), particulièrement sous la forme de compartiments et/ou de couvercles.

7. Stator (1) selon l'une des revendications précédentes, **caractérisé en ce que** les segments de refroidissement (9, 9a, 9b) et/ou les tubes axiaux (8) et/ou les alésages axiaux (7) sont agencés au dos du paquet de tôles du stator (5).

8. Stator (1) selon l'une des revendications précédentes, **caractérisé en ce que** le circuit de refroidissement parcourt, et/ou correspond par sa taille à, l'ensemble de la surface périphérique radiale à l'extérieur, plus particulièrement en dessous, des enroulements du paquet de tôles du stator (5).

9. Stator (1) selon l'une des revendications précédentes, **caractérisé en ce que** les tubes axiaux (8) et/ou les alésages axiaux (7) sont agencés sur le côté, opposé au rotor (2), des enroulements à l'intérieur ou à l'extérieur du paquet de tôles du stator (5).

10. Stator (1) selon l'une des revendications précédentes, **caractérisé en ce que** les tubes axiaux (8) et/ou les alésages axiaux (7) sont agencés en dessous des enroulements à l'intérieur ou à l'extérieur du paquet de tôles du stator (5).

11. Stator (1) selon l'une des revendications précédentes, **caractérisé en ce que** les tubes axiaux (8) et/ou les alésages axiaux (7) sont agencés à l'extérieur du champ magnétique inductible ou induit par les enroulements.

12. Stator (1) selon l'une des revendications précédentes, **caractérisé en ce que** les tubes axiaux (8) sont des tubes de cuivre pressés et/ou roulés, respectivement dans un alésage axial (7), en particulier par évasement.

13. Stator (1) selon l'une des revendications précédentes, **caractérisé en ce que** le côté extérieur des tubes de cuivre, appuyé contre le côté intérieur d'un alésage axial (7) respectif, est muni d'une pâte thermo-conductrice, et/ou **en ce que** les sections transversales d'ouverture des alésages axiaux (7), positionnées sur le côté frontal, sont respectivement étanchéifiées contre le tube de cuivre respectivement adjacent au moyen d'un joint torique (18) présentant un noyau en silicone et une enveloppe en téflon.

14. Stator (1) selon l'une des revendications précédentes, **caractérisé en ce que**, dans le circuit de refroidissement, en tant que fluide de refroidissement, de l'eau s'écoule, en particulier est mise en circulation ou transvasée.

15. Stator (1) selon l'une des revendications précédentes, **caractérisé en ce qu'**il fait partie d'un alternateur synchrone à quatre pôles ou d'un alternateur asynchrone, dont le rotor, en particulier le rotor externe (2), est relié sans engrenage intermédiaire au rotor de l'éolienne ou de la centrale éolienne.
